# EUROPEAN PATENT SPECIFICATION

(11) **EP 3 872 408 B1**
(45) Date of publication and mention of the grant of the patent: **15.06.2022**
(21) Application number: 20191480.1
(22) Date of filing: 18.08.2020
(51) Int. Cl.: F24F 11/38, F24F 11/65, F24F 11/83, F25B 25/00

(54) **WATER FILLING METHOD FOR AN AIR CONDITIONER**
WASSERFÜLLVERFAHREN FÜR EINE KLIMAANLAGE
PROCÉDÉ DE REMPLISSAGE D'EAU POUR UN CLIMATISEUR

(30) Priority: 28.02.2020 KR 20200024944
(43) Date of publication of application: 01.09.2021
(73) Proprietor: LG Electronics Inc., 07336 SEOUL (KR)
(72) Inventor: JUNG, Jaehwa, 08592 Seoul (KR); LEE, Jisung, 08592 Seoul (KR)
(74) Representative: Vossius & Partner Patentanwälte Rechtsanwälte mbB

(56) References cited:
- EP-A1- 2 341 295
- JP-A- 2016 090 178

## Description

### BACKGROUND

### 1.Field

The present invention relates to a water filling method for an air conditioner.

### 2. Discussion of the Related Art

The air cleaner is an apparatus for keeping air in a predetermined space in a most suitable state according to use and purpose. In general, the air conditioner includes a compressor, a condenser, an expansion device, and an evaporator, and a cooling cycle that performs compression, condensation, expansion, and evaporation of refrigerant is driven to cool or heat a predetermined space.

The predetermined space may be variously proposed depending on a place where the air conditioner is used. In one example, the air conditioner may be located in a home or office.

When the air conditioner performs a cooling operation, an outdoor heat exchanger provided in an outdoor unit functions as a condenser and an indoor heat exchanger provided in an indoor unit functions as an evaporator. On the other hand, when the air conditioner performs a heating operation, the indoor heat exchanger functions as a condenser and the outdoor heat exchanger functions as an evaporator.

Recently, there is a tendency to limit the type of refrigerant used in the air conditioner and reduce the amount of refrigerant used according to the environmental regulation policy.

In order to reduce the amount of refrigerant used, a technique of performing cooling or heating operation by performing heat exchange between refrigerant and a predetermined fluid has been proposed. For example, the predetermined fluid may include water.

In relation to a system that performs cooling or heating operation through heat exchange between refrigerant and water, the following prior art documents are disclosed: KR 2013 0127531 and EP 2 341 295 A1.

On the other hand, in the case of the system that performs cooling or heating operation through heat exchange between refrigerant and water, a pipe through which water flows needs to be filled with water during initial installation.

For example, a water supply source may be connected to a pipe for filling of water, and water supplied from the water supply source may be manually filled in the system. In this case, since the filling amount of water is determined by the subjective judgment of a person performing water filling, it is difficult to accurately determine whether the water is properly filled.

### SUMMARY

The present invention provides a water filling method as defined in claim 1. This method automatically performs water filling and determines whether an appropriate amount of water is filled. It allows a user to easily check the water filling completion by outputting completion notification information when the water filling is completed.

The method of the invention can also allow a user to easily check that the filling of water is not normal by outputting error information when the filling of water is not normally performed during a water filling process.

The air conditioner includes an outdoor unit through which a refrigerant circulates, a plurality of indoor units through which water circulates, and a heat exchange device including a plurality of heat exchangers which connect the outdoor unit with the plurality of indoor units and perform heat exchange between the refrigerant and the water, a group of pipes which connect the plurality of indoor units with the plurality of heat exchangers, a group of valves which regulates flow of water in the group of pipes.

According to the invention, the water filling method for the air conditioner in particular includes operating, by the air conditioner, in a water supply mode to fill the group of pipes with water, determining whether a filling amount of water in the group of pipes is appropriate while continuously filling the group of pipes with water, and outputting, by an output device, information indicating that filling of water has been completed when it is determined that the filling amount of the water is appropriate, thereby performing filling of water automatically, and determining that filling of an appropriate amount of water is completed during the water filling process.

When the water filling is completed and completion notification information is output, the user can easily check the completion of the water filling.

According to the invention, the water supply mode includes a first water supply mode in which water is supplied while the outdoor unit is stopped and a second water supply mode in which water is supplied while the outdoor unit is operated.

The operating in the first water supply mode may include a first supply process in which water is supplied and is distributed to the indoor units while a plurality of pumps for pumping water in the group of pipes are stopped.

The operating in the first water supply mode may include a second supply process in which water is supplied and distributed to the indoor units while some of the plurality of pumps in the group of pipes are operated.

The plurality of heat exchangers may include a first heat exchanger and a second heat exchanger, and the plurality of pumps may include a first pump corresponding to the first heat exchanger and a second pump corresponding to the second heat exchanger.

The first pump may be provided in a connection tube connected to the first heat exchanger and water of a water supply source may be supplied to the connection tube.

The first pump may be operated and the second pump may be stopped in the second supply process.

The air conditioner may further include a plurality of air discharge portions for discharging air in the group of pipes. The plurality of air discharge portions are opened with a set opening degree in the operating in the first water supply mode.

The operating in the first water supply mode may further include an air discharge process such that water flows through only some of the plurality of indoor units.

The plurality of air discharge portions may be disposed respectively corresponding to the plurality of indoor units to discharge air in the group of pipes. The air discharge portions corresponding to the indoor units through which the water flows may be opened and the remaining air discharge portion may be closed in the air discharge process. The air discharge portions corresponding to the indoor units through which the water flows may be opened with a maximum opening degree.

The air discharge process may include allowing water to flow through other some of the indoor units after the water has flowed through the some of the plurality of indoor units.

The outdoor unit may be operated in a heating mode in the second water supply mode.

The second water supply mode may include a third supply process in which the plurality of pumps are operated and the plurality of heat exchangers are operated.

In the third supply process, an input duty of the first pump may be larger than an input duty of the second pump.

The second water supply mode may include a fourth supply process in which some of the plurality of pumps are operated, some of the plurality of heat exchangers are operated, and water is allowed to flow through only some of the plurality of indoor units.

The fourth supply process may include allowing water to flow through other some of the indoor units after the water has flowed through the some of the plurality of indoor units.

The second water supply mode may include an air discharge process in which the plurality of pumps are operated and the plurality of heat exchangers are operated. An input duty of the pump operated in the third supply process may be larger than an input duty of the pump operated in the air discharge process. Water pumped by the first pump may flow into all the plurality of indoor units and water pumped by the second pump may flow into some of the plurality of indoor units.

The determining of whether the filling amount of water is appropriate includes operating the plurality of pumps for pumping water in the group of pipes and operating the plurality of heat exchangers, and the number of the plurality of indoor units operated may vary with a lapse of time.

It may be determined that the filling amount of water is appropriate when an output duty of a pump operated is in a normal range. The water filling method may further include operating the air conditioner in a checking mode when it is determined that the filling amount of water is inappropriate.

In the checking mode, the plurality of pumps for pumping water in the group of pipes may be operated, the plurality of heat exchangers may be operated, and water may flow into all of the indoor units.

The filling amount of water is appropriate may be again determined after completion of the checking mode, and when the filling amount of water is appropriate, water filing completion information may be output from the output device, and, when the filling amount of water is inappropriate, error information may be output from the output device. When water filing is not normally performed in the water filling process, error information may be output, thus allowing a user to easily check that the filling of water is not normal.

The operating in the first water supply mode may include a first supply process in which water is supplied and is distributed to the indoor units while a plurality of pumps are stopped, and a second supply process in which water is supplied and distributed to the indoor units while some of the plurality of pumps are operated.

The operating in the first water supply mode may further include an air discharge process such that water flows through only some of the plurality of indoor units.

The second water supply mode may include one or more of a third supply process in which the plurality of pumps are operated and the plurality of heat exchangers are operated, a fourth supply process in which some of the plurality of pumps are operated, some of the plurality of heat exchangers are operated, and water is allowed to flow through only some of the plurality of indoor units, and an air discharge process in which the outdoor unit is subjected to a heating operation, the plurality of heat exchangers are operated, and the plurality of pumps are operated, an input duty of the pump being larger than that in the third supply process.

The determining of whether the filling amount of water is appropriate includes operating the plurality of pumps for pumping water in the group of pipes and operating the plurality of heat exchangers, the number of the plurality of indoor units operated may vary with a lapse of time, and it may be determined that the filling amount of water is appropriate when an output duty of the pump operated is in a normal range.

The air conditioner may further include an output device that outputs water filing completion information when the filling amount of water is appropriate, and outputs error information when the filling amount of water is inappropriate.

### BRIEF DESCRIPTION OF THE DRAWINGS

FIG. 1 is a schematic view showing a configuration of an air conditioner according to an embodiment of the present disclosure.
FIG. 2 is a cycle diagram showing a configuration of an air conditioner according to an embodiment of the present disclosure.
FIG. 3 is a flowchart for describing a water filling method for the air conditioner of this embodiment.
FIG. 4 is a view for describing a first supply process during a first water supply mode.
FIG. 5 is a view for describing a second supply process during a first water supply mode.
FIGS. 6 to 9 are views for describing an air discharge process in the first water supply mode.
FIG. 10 is a view for describing a third supply process during the second water supply mode.
FIGS. 11 to 14 are views for describing a fourth supply process during the second water supply mode.
FIG. 15 is a view for describing an air discharge process during the second water supply mode.
FIGS. 16 to 19 are views showing the operation of the air conditioner for determining whether the filling amount of water is appropriate.

### DETAILED DESCRIPTION OF THE PREFERRED EMBODIMENTS

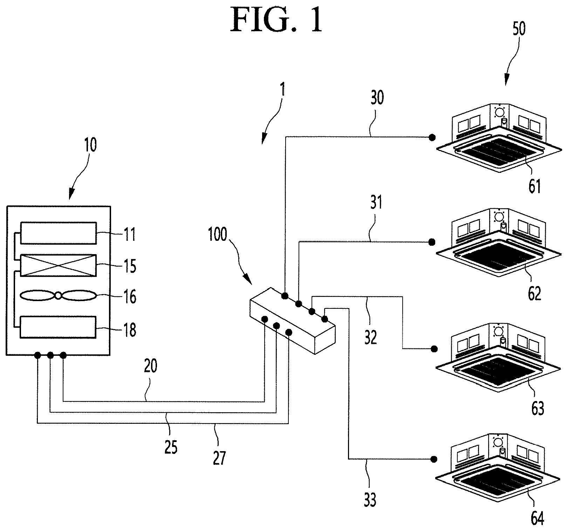

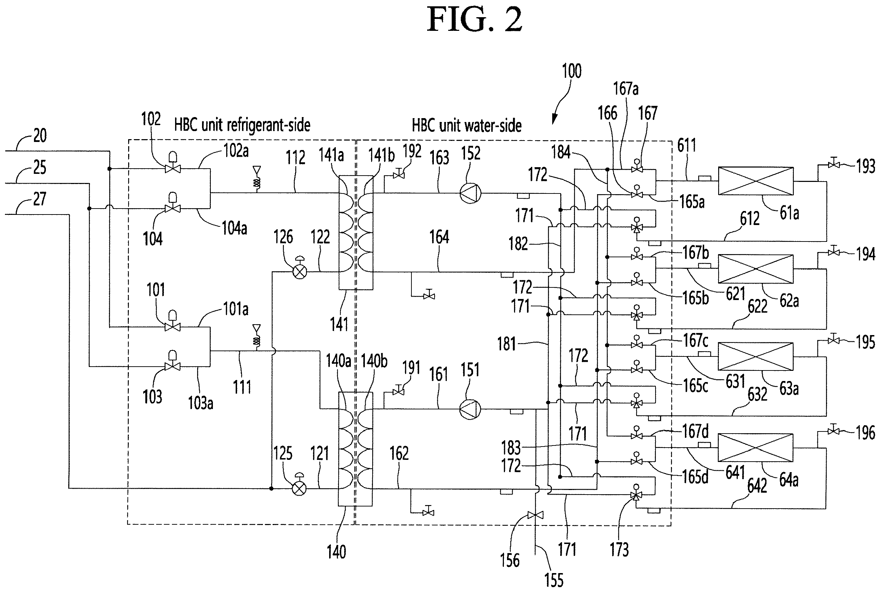

FIG. 1 is a schematic view showing a configuration of an air conditioner according to an embodiment of the present disclosure and FIG. 2 is a cycle diagram showing a configuration of an air conditioner according to an embodiment of the present disclosure.

Referring to FIGS. 1 and 2, an air conditioner 1 according to an embodiment of the present disclosure includes an outdoor unit 10, an indoor unit 50, and a heat exchange device 100 connected to the the outdoor unit 10 and the indoor unit 50.

The outdoor unit 10 and the heat exchange device 100 are fluidly connected by a refrigerant.

The refrigerant may flow through a refrigerant-side flow path of a heat exchanger provided in the heat exchange device 100 and the outdoor unit 10.

The outdoor unit 10 may include a compressor 11 and an outdoor heat exchanger 15.

An outdoor fan 16 is provided at one side of the outdoor heat exchanger 15 to blow outside air toward the outdoor heat exchanger 15, and heat exchange may be made between the outside air and the refrigerant of the outdoor heat exchanger 15 by the operation of the outdoor fan 16. The outdoor unit 10 may further include a main expansion valve 18 (EEV).

The air conditioner 1 further includes connection pipes 20, 25, and 27 connecting the outdoor unit 10 and the heat exchange device 100.

The connection pipes 20, 25, and 27 may include a first outdoor unit connection pipe 20 as a pipe (high pressure pipes) through which a high-pressure gaseous refrigerant flows, a second outdoor unit connection pipe 25 as a pipe (low pressure pipe) through which a low-pressure gaseous refrigerant flows, and a third outdoor unit connection pipe 27 as a liquid pipe through which a liquid refrigerant flows.

That is, the outdoor unit 10 and the heat exchange device 100 have a "three-pipe connection structure", and the refrigerant may be circulated through the outdoor unit 10 and the heat exchange device 100 by the three connection pipes 20, 25, and 27.

The heat exchange device 100 and the indoor unit 50 are fluidly connected by water.

The water may flow through a water-side flow path of a heat exchanger provided in the heat exchange device 100 and the indoor unit 50.

The heat exchange device 100 includes a plurality of heat exchangers 140 and 141. The heat exchanger may include, for example, a plate heat exchanger.

The indoor unit 50 includes a plurality of indoor units 61, 62, 63 and 64. In the present embodiment, it should be noted that the number of indoor units 61, 62, 63, and 64 is not limited, and it is illustrated in FIG. 1 that for example, four indoor units 61, 62, 63 and 64 are connected to the heat exchange devices 100.

The plurality of indoor units 61, 62, 63, and 64 may include a first indoor unit 61, a second indoor unit 62, a third indoor unit 63, and a fourth indoor unit 64.

The air conditioner 1 may further include first to fourth indoor unit connection pipes 30, 31, 32, and 33 connecting the heat exchange device 100 and the indoor units 50.

Water may circulate through the heat exchange device 100 and the indoor unit 50 through the indoor unit connection pipes 30, 31, 32, and 33. Of course, when the number of indoor units increases, the number of pipes connecting the heat exchange device 100 and the indoor units will increase.

According to this configuration, refrigerant circulating through the outdoor unit 10 and the heat exchange device 100, and water circulating through the heat exchange device 100 and the indoor unit 50 may be heat-exchanged through heat exchangers 140 and 141 provided in the heat exchange device 100.

Water cooled or heated through the heat exchange may heat or cool an indoor space by exchanging heat with indoor heat exchangers 61a, 62a, 63a and 64a provided in the indoor unit 50.

The plurality of heat exchangers 140 and 141 may be provided in the same number as the number of the indoor units 61, 62, 63 and 64. Alternatively, two or more indoor units may be connected to one heat exchanger.

Hereinafter, the heat exchange device 100 will be described in detail.

The heat exchange device 100 may include first and second heat exchangers 140 and 141 fluidly connected to the indoor units 61, 62, 63 and 64.

The first and second heat exchangers 140 and 141 may be formed in the same structure.

Each of the heat exchangers 140 and 141 may include, for example, a plate heat exchanger, and may be configured in such manner that water flow paths and refrigerant flow paths are alternately stacked.

Each of the heat exchangers 140 and 141 may include refrigerant flow paths 140a and 141a and water flow paths 140b and 141b.

The refrigerant flow paths 140a and 141a may be fluidly connected to the outdoor unit 10, and the refrigerant discharged from the outdoor unit 10 may be introduced to the refrigerant flow paths 140a and 141a or the refrigerant has passed through the refrigerant flow paths 140a and 141a may be introduced to the outdoor unit 10.

The water flow paths 140b and 141b are connected to the indoor unit 61, 62, 63 and 64, respectively, and water discharged from the indoor units 61, 62, 63 and 64 may be introduced into the water flow paths 140b and 141a, and the water which has passed through the flow paths 140b and 141a may be introduced into the indoor units 61, 62, 63, and 64.

The heat exchange device 100 may include a first branch pipe 101a and a second branch pipe 102a branched from the first outdoor unit connection pipe 20. Valves 101 and 102 may be provided in the first branch pipe 101a and the second branch pipe 102a. It should be noted that there is no limit in the number of branch pipes branching from the first outdoor unit connection pipe 20.

The heat exchanger 100 may include a third branch pipe 103a and a fourth branch pipe 104a branching from the second outdoor unit connection pipe 25. Valves 103 and 104 may be provided in the third branch pipe 103a and the fourth branch pipe 104a. It should be noted that there is no limit in the number of branch pipes branching from the second outdoor unit connection pipe 25.

The heat exchange device 100 may include a first common gas pipe 111 to which the first branch pipe 101a and the third branch pipe 103a are connected and a second common gas pipe 112 to which the second branch pipe 102a and the fourth branch pipe 104a are connected.

The first common gas pipe 111 may be connected to one ends of the refrigerant flow paths 140a and 141a of the heat exchangers 140 and 141.

Refrigerant pipes 121 and 122 may be connected to the other ends of the refrigerant flow paths 140a and 141a of the heat exchangers 140 and 141.

A first refrigerant pipe 121 may be connected to the first heat exchanger 140 and a second refrigerant pipe 122 may be connected to the second heat exchanger 141. A first expansion valve 125 may be provided in the first refrigerant pipe 121, and a second expansion valve 126 may be provided in the second refrigerant pipe 122.

The first refrigerant pipe 121 and the second first refrigerant pipe 122 may be connected to a third outdoor unit connection pipe 27.

Each of the expansion valves 125 and 126 may include, for example, an electronic expansion valve (EEV).

The electronic expansion valve may drop the pressure of refrigerant passing through the expansion valve through control of an opening degree. As one example, when the expansion valve is fully opened (in a full-open state), refrigerant may pass through without reduction in pressure, and when the opening degree of the expansion valve is reduced, the refrigerant may be depressurized. The degree of pressure reduction of the refrigerant increases as the opening degree decreases.

On the other hand, the heat exchange device 100 may further include first connection pipes 161 and 163 (or heat exchanger inlet pipes) connected to the water flow paths 140b and 141b of the heat exchangers 140 and 141, and second connection pipes 162 and 164 (or heat exchanger outlet pipes)

A first pump 151 may be provided in the first connection pipe 161 of the first heat exchanger 140, and a second pump 152 may be provided in the first connection pipe 163 of the second heat exchanger 141.

A first common water pipe 181 may be connected to the first connection pipe 161 of the first heat exchanger 140. A second common water pipe 182 may be connected to the first connection pipe 163 of the second heat exchanger 141.

A third common water pipe 183 may be connected to the second connection pipe 162 of the first heat exchanger 140. A fourth common water pipe 184 may be connected to the second connection pipe 164 of the second heat exchanger 141.

A first water outlet pipe 171 through which water discharged from the indoor heat exchangers 61a, 62a, 63a and 64a flows may be connected to the first common water pipe 181.

A second water outlet pipe 172 through which water discharged from the indoor heat exchangers 61a, 62a, 63a and 64a flows may be connected to the second common water pipe 182.

The first water outlet pipe 171 and the second water outlet pipe 172 may be disposed in parallel and connected to common water outlet pipes 612, 622, 632 and 642 communicating with the indoor heat exchangers 61a, 62a, 63a and 64a.

The first water outlet pipe 171, the second water outlet pipe 172, and the common water outlet pipe 612, 622, 632 or 642 may be connected by, for example, a three-way valve 173.

Therefore, the water of the common water outlet pipes 612, 622, 632, and 642 may flow into any one of the first water outlet pipe 171 and the second water outlet pipe 172 by the three-way valve 173.

The first water inlet pipes 165a, 165b, 165c and 165d through which water to be introduced into the indoor heat exchangers 61a, 62a, 63a and 64a flows may be connected to the third common water pipe 183.

The second water inlet pipes 167a, 167b, 167c and 167d through which water to be introduced into the indoor heat exchangers 61a, 62a, 63a and 64a flows may be connected to the fourth common water pipe 184.

The first water inlet pipes 165a, 165b, 165c and 165d and the second water inlet pipes 167a, 167b, 167c and 167d may be disposed in parallel and connected to the common water inlet pipes 611, 621, 631 and 641 communicating with the indoor heat exchangers 61a, 62a, 63a and 64a.

Each of the first water inlet pipes 165a, 165b, 165c and 165d may be provided with a first valve 166 and the second water inlet pipes 167a, 167b, 167c and 167d may be provided with a second valve 167.

Meanwhile, a water supply pipe 155 may be connected to at least one of the first connection pipe 161 of the first heat exchanger 140 and the first connection pipe 163 of the second heat exchanger 141. A valve 156 may be provided in the water supply pipe 155. When a hose connected to a water supply source is connected to the water supply pipe 155 and the valve 156 is opened, water from the water supply source is supplied to the first connection pipes 161 and 163 through the water supply pipe 155.

In FIG. 2, it is illustrated that, for example, the water supply pipe 155 is connected to the first connection pipe 161 of the first heat exchanger 140.

The first connection pipe 161 of the first heat exchanger 140 and the first connection pipe 163 of the second heat exchanger 141 may be provided with air discharge portions 191 and 192 for discharge of air. The air discharge portions 191 and 192 include a pipe and a valve provided in the pipe, and air in the first connection pipes 161 and 163 may be discharged by opening the valve. Hereinafter, the opening of the air discharge portions 191 and 192 means that the valve is opened.

The common water inlet pipes 611, 621, 631 and 641 and/or the common water outlet pipes 612, 622, 632 and 642 are provided with air discharge portions 193, 194, 195 and 196 for discharging air. Each of the air discharge portions 193, 194, 195 and 196 include a pipe and a valve provided in the pipe, and air in the common water inlet pipes 611, 621, 631 and 641 or air in the common water outlet pipes 612, 622, 632 and 642 may be discharged by opening the valves. Hereinafter, the opening of the air discharge portions 193, 194, 195 and 196 means that the valves are opened.

In FIG. 2, it is illustrated that, for example, the common water outlet pipes 612, 622, 632, and 642 are provided with air discharge portions 193, 194, 194, and 195.

Hereinafter, operation of an air conditioner will be described briefly.

First, when the air conditioner 1 is operated in a heating mode (when a plurality of indoor units are operated in a heating mode), the high-pressure gaseous refrigerant compressed in the compressor 11 of the outdoor unit 10 flows through the first outdoor unit connection pipe 20 and is then distributed to the first branch pipe 101a and the second branch pipe 102a.

During the heating operation of the air conditioner 1, the first valves 101 and 102 of the first and second branch pipes 101a and 102a are opened, and the second valves 103 and 104 of the third and fourth branch pipes 103a and 104a are closed.

The refrigerant distributed to the first branch pipe 101a flows along the first common gas pipe 111 and then flows to the refrigerant flow path 140a of the first heat exchanger 140. The refrigerant distributed to the second branch pipe 102a flows along the first common gas pipe 112 and then flows to the refrigerant flow path 141a of the second heat exchanger 141.

In the present embodiment, during the heating operation of the air conditioner 1, the heat exchangers 140 and 141 may function as a condenser.

During the heating operation of the air conditioner 1, the first expansion valve 125 and the second expansion valve 126 are opened.

The refrigerant passing through the refrigerant flow paths 140a and 141a of the heat exchangers 140 and 141 flows into the third outdoor unit connection pipe 27 after passing through the expansion valves 125 and 126.

The refrigerant discharged to the third outdoor unit connection pipe 27 may be introduced into the outdoor unit 10 and may be sucked into the compressor 11. The high-pressure refrigerant compressed by the compressor 11 flows back to the heat exchange device 100 through the first outdoor unit connection pipe 20.

Water flowing through the water flow paths 140b and 141b of the heat exchangers 140 and 141 is heated by heat exchange with a refrigerant, and the heated water is supplied to the heat exchangers 61a, 62a, 63a and 64a.

The water discharged to the second connection pipe 162 of the first heat exchanger 140 flows to the first indoor heat exchanger 61a and the second indoor heat exchanger 62a through the third common water pipe 183.

On the other hand, the water discharged to the second connection pipe 164 of the second heat exchanger 140 flows to the third indoor heat exchanger 63a and the second indoor heat exchanger 64a through the fourth common water pipe 184. The operations of the first valve 167 and the second valve 166 may be controlled to enable the flowing of water.

Water pumped by one pump may flow to some of all the indoor heat exchangers. In this case, the water pumped by each pump may evenly flow to the indoor heat exchangers. For example, water pumped by the first pump 151 may flow to the first and second indoor heat exchangers 61a and 62a, and water pimped by the second pump 152 may flow to the third and fourth indoor heat exchangers 63a and 64a. Of course, there is no limit to the number of indoor heat exchangers through which water pumped by one pump flows. The flow of water may be variously controlled by the control of the plurality of first valves 166, the plurality of second valves 167, and the plurality of three-way valves 173.

Water flowing through the first and second indoor heat exchangers 61a and 62a may flow to the first heat exchanger 140 after flowing toward the first common water pipe 181, and water flowing through the third and fourth indoor heat exchangers 63a and 64a may flow to the second heat exchanger 141 after flowing toward the second common water pipe 182.

The water flowing through the indoor heat exchangers 61a, 62a, 63a and 64a may be heat-exchanged with indoor air blown into the indoor heat exchanger.

Since water heat-exchanged with refrigerant and the in the heat exchangers 140 and 141 is in a high temperature state, indoor air is heated to enable indoor heating when the water and the indoor air are heat-exchanged while the water is flowing through the indoor heat exchangers 61a, 62a, 63a and 64a.

On the other hand, when the air conditioner 1 is subjected to a cooling operation (when a plurality of indoor units are operated in a cooling mode), the high-pressure gaseous refrigerant compressed in the compressor 11 of the outdoor unit 10 flows to the outdoor heat exchanger 15. The high-pressure liquid refrigerant condensed in the outdoor heat exchanger 15 may be distributed to the first refrigerant pipe 121 and the second cold exhaust pipe 122 after flowing through the third outdoor unit connection pipe 27.

The first valves 101 and 102 of the first branch pipe 101a and the second branch pipe 102a are closed and the second valves 103 and 104 of the third branch pipe 103a and the fourth branch pipe 104a are opened when the air conditioner 1 is being operated in a cooling mode.

Since the expansion valves 125 and 126 provided in the first and second refrigerant pipes 121 and 122 are opened with a predetermined opening degree, refrigerant may be decompressed to be low-pressure refrigerant by passing through the expansion valves 125 and 126.

The decompressed refrigerant may be evaporated through heat exchange with water while flowing along the refrigerant flow paths 140a and 141a of the heat exchangers 140 and 141. That is, during the cooling operation of the air conditioner 1, the heat exchangers 140 and 141 may function as evaporators.

Therefore, the refrigerant that has passed through the refrigerant flow paths 140a and 141a of the heat exchangers 140 and 141 flows to the common gas pipes 111 and 112.

The refrigerant which has flowed into the common gas pipes 111 and 112 flows to the third and fourth branch pipes 103a and 104a and then to the second outdoor unit connection pipe 25.

The refrigerant discharged to the second outdoor unit connection pipe 25 may be introduced into the outdoor unit 10 and may be sucked into the compressor 11. The high-pressure refrigerant compressed in the compressor 11 is condensed in the outdoor heat exchanger 15, and the condensed liquid refrigerant may flow along the third outdoor unit connection pipe 27 again.

Meanwhile, since the flow of water during the cooling operation of the air conditioner is the same as the flow of water during the heating operation, a detailed description thereof will be omitted.

Hereinafter, a water filling method for the air conditioner in accordance with an embodiment of the present invention will be described.

Upon initial installation of the air conditioner or when water leak in the indoor unit connection pipe are detected and repaired, the indoor unit connection pipe may need to be filled with water.

The flow of water in the indoor unit connection pipes in the water filling process described below is different from the flow of water during heating or cooling operation of the air conditioner.

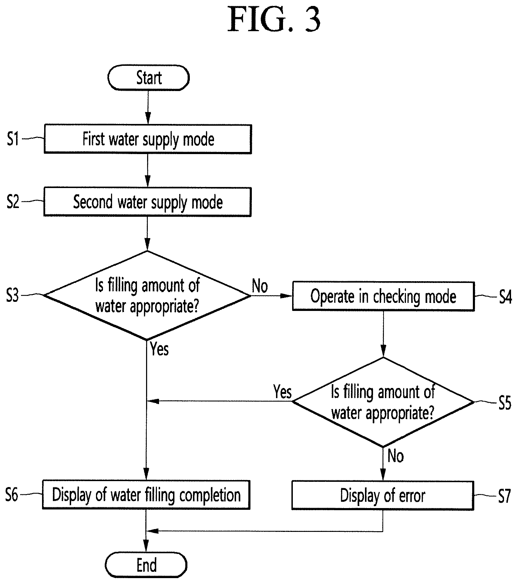

FIG. 3 is a flowchart for describing a water filling method for the air conditioner of this embodiment of the present invention.

Referring to FIG. 3, the water filling method for the air conditioner of the invention includes a step (S1) of operating the air conditioner in a first water supply mode and a step (S2) of operating the air conditioner in a second water supply mode. The first and second water supply modes may be performed automatically.

The water filling method for the air conditioner of the invention further includes a step (S3) of determining whether or not the filling amount of water is appropriate. The step S3 may also be performed automatically.

Although not shown, the outdoor unit 10 or the heat exchange device 100 may be provided with an input portion for filling of water.

When the filling amount is appropriate as a result of the determination in step S3, the filling of water is terminated, and information indicating that the filling of water is completed is output through an output device (S6).

Although not shown, the output device may be provided in the indoor unit 50, the outdoor unit 10, or the heat exchange device 100, and the output device may include a display that outputs information such as speech or displays information on a screen. As an example, filling completion display information may be displayed on the display. The display may be an independent display or may be installed in a PCB, which is a component of a controller that controls the air conditioner.

Alternatively, filling completion information may be transmitted to a user terminal capable of communicating with the air conditioner, making it possible to check the filling completion information through the user terminal.

On the other hand, when the filling amount of water is inappropriate as a result of the determination in step S3, the air conditioner may be operated in a checking mode (S4).

After the air conditioner is operated in the checking mode, it may be determined again whether the filling amount of water is appropriate (S5).

When the filling amount of water is appropriate as a result of the determination in step S5, the filling of water is terminated, and information indicating that the filling of water is completed may be output through an output device (S6).

On the other hand, when the filling amount of water is inappropriate as a result of the determination in step S5, error information may be output from the output device (S7). When the filling amount of water is inappropriate in step S5, it may be a case where water leakage occurs in an indoor unit connection pipe or a pipe inside the heat exchange device.

Hereinafter, the specific operation of the air conditioner in each step will be described.

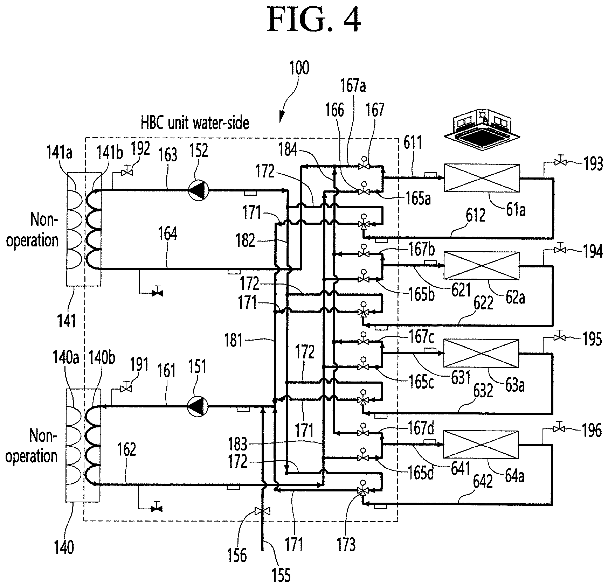

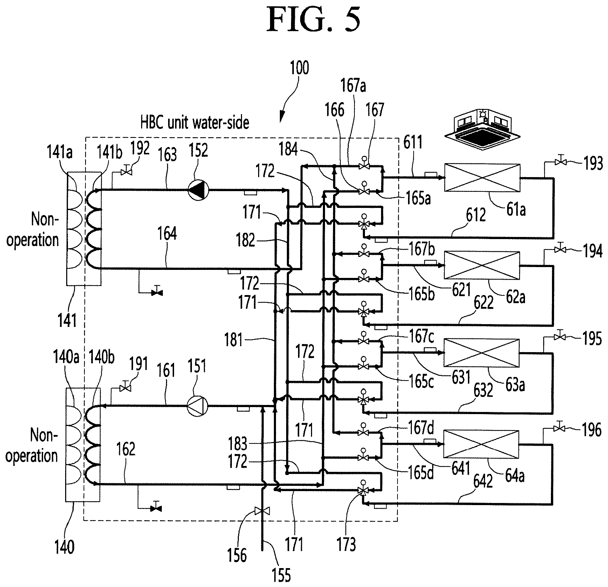

FIG. 4 is a view for describing a first supply process during a first water supply mode, and FIG. 5 is a view for describing a second supply process during a first water supply mode.

Referring to FIGS. 4 and 5, in the first water supply mode, the outdoor unit 10 is not operated. Therefore, a refrigerant does not flow in the first heat exchangers 140 and 141.

Referring to FIG. 4, the step of operating in the first water supply mode may include a first supply process of performing water filling in a state in which the pumps 151 and 152 are not operated. That is, the valve 156 of the water supply pipe 155 may be opened while the first pump 151 and the second pump 152 are stopped.

When the valve 156 is opened, water from a water supply source may be supplied to the first connection pipe 161 of the first heat exchanger 140. The water supplied to the first connection pipe 161 may not only flow through the inside of the first heat exchanger 140, but also flow to the first common water pipe 181.

The first valve 166, the second valve 167, and the three-way valve 173 may be opened such that the water of the first common water pipe 181 and the water of the second connection pipe 162 of the first heat exchanger 140 flows to the indoor heat exchangers 61a, 62a, 63a and 64a and the second heat exchanger 141.

During the first supply process, the air discharge portions 191, 192, 193, 194, 195 and 196 may be opened with a certain opening degree. When the air discharge portions 191, 192, 193, 194, 195 and 196 are opened with the certain opening degree, air existing inside the first connection pipes 161 and 163 and the indoor unit connection pipes 30, 31, 32 and 33 may be discharged to the outside.

The amount of air discharged may vary depending on the opening degrees of the air discharge portions 191, 192, 193, 194, 195, and 196.

The first supply process may be finished when a first set time has elapsed.

The step of operating in the first water supply mode may include a second supply process of performing filling of water in a state in which some pumps 151 are operated.

Referring to FIG. 5, in the second supply process, the first pump 151 provided in the first connection pipe 161 to which the water supply pipe 155 is connected may operate. In the second supply process, the second pump 152 may maintain a stopped state.

Even in the second supply process, the first valve 166, the second valve 167, and the three-way valve 173 may be opened such that the supplied water flows to the indoor heat exchangers 61a, 62a, 63a and 64a and the second heat exchanger 141.

In addition, even in the second supply process, the air discharge portions 191, 192, 193, 194, 195, and 196 may be opened with a certain opening degree.

The pumps 151 and 152 of the present embodiment may fail when pumping air other than liquid. Since air is present inside the indoor unit connection pipes 30, 31, 32, and 33 in the initial stage of installation of the air conditioner, in the first supply process, water is supplied in a state where the pumps 151, 152 are stopped, thus preventing failures of the pumps 151 and 152.

In addition, in the present embodiment, since the water supply pipe 155 is connected to the first connection pipe 161 of the first heat exchanger 140, it is possible to prevent the failure of the second pump 152 by turning on only the first pump 151 provided in the first connection pipe 161.

Since it is highly likely that air is present in the first connection pipe 163 of the second heat exchanger 141 provided with the second pump 152 even after the first supply process is finished, the second pump 152 is not operated in the second supply process to prevent the failure of the second pump 152.

In the second supply process, water may rapidly flow to be distributed to the indoor unit connection pipes 30, 31, 32, and 33 by the operation of the first pump 151.

The second supply process may be finished when a second set time has elapsed.

The step of operating in the first water supply mode may further include an air discharge process for discharging air in the indoor unit connection pipes 30, 31, 32 and 33 to the outside in the process of filling of water. However, the air discharge process may be omitted in the present embodiment.

In the present specification, pipes for the movement of water in the heat exchanger 100 (first connection pipe, second connection pipe, first to fourth common water pipes, first and second water inlet pipes, first and second water outlet pipes) outlet pipe) and the indoor unit connection pipes 30, 31, 32 and 33 may be collectively referred to as a group of pipes.

For example, pipes for circulating water between the first and second heat exchangers 140 and 141 and the first indoor heat exchanger 61a may be referred to as a first group of pipes. Further, pipes for circulating water between the first and second heat exchangers 140 and 141 and the second indoor heat exchanger 62a may be referred to as a second group of pipes. Pipes for circulating water between the first and second heat exchangers 140 and 141 and the third indoor heat exchanger 63a may be referred to as a third group of pipes. Pipes for circulating water between the first and second heat exchangers 140 and 141 and the fourth indoor heat exchanger 64a may be referred to as a fourth group of pipes.

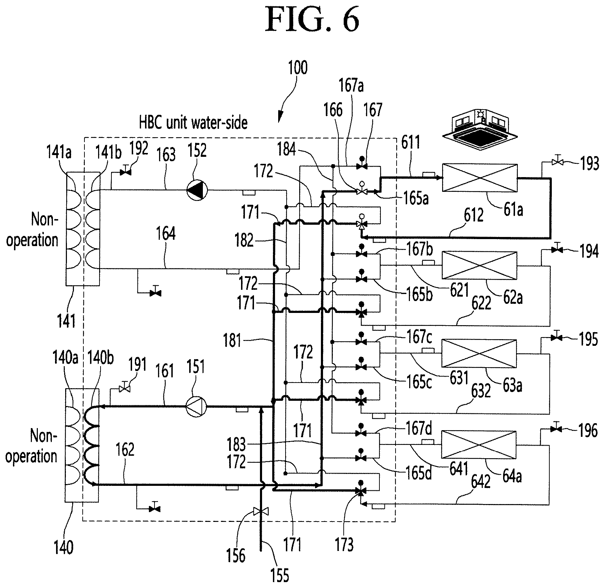

FIGS. 6 to 9 are views for describing an air discharge process in the first water supply mode.

Referring to FIGS. 6 to 9, the air discharge process is a process of discharging air from the group of pipes connected to a specific indoor heat exchanger due to a strong water pressure by supplying water only to the specific indoor heat exchanger.

Referring to FIG. 6, the first pump 151 may operate while the second pump 152 is stopped.

First, a process for discharging air inside the first group of pipes for flowing water to the first indoor heat exchanger 61a may be performed. To this end, the air discharge portion 193 provided in the common water outlet pipe 612 of the first indoor heat exchanger 61a may be opened with the maximum opening degree, and a first valve 166 corresponding to the first indoor heat exchanger 61a may be opened. In addition, the common water outlet pipe 612 of the first indoor heat exchanger 61a may communicate with the first water outlet pipe 171 by a three-way valve 173 corresponding to the first indoor heat exchanger 61a.

On the other hand, the air discharge portions 194, 195, and 196 corresponding to the second to fourth indoor heat exchangers 62a, 63a and 64a may be closed, and the first valve 166 and the second valve 167 correspond to the second to fourth indoor heat exchangers 62a, 63a and 64a may be closed. In addition, the air discharge portion 192 provided in the first connection pipe 163 of the second heat exchanger 141 is closed, and the air discharge portion 191 provided in the first connection pipe 161 of the first heat exchanger 140 is opened.

In this case, since water flows only into the first group of pipes, the pressure of the water flowing in the first group of pipes is large, and thus, the air in the first group of pipes may be effectively discharged to the outside through the air discharge portions 191 and 193.

The process of discharging the air in the first group of pipes may be finished when a third set time has elapsed.

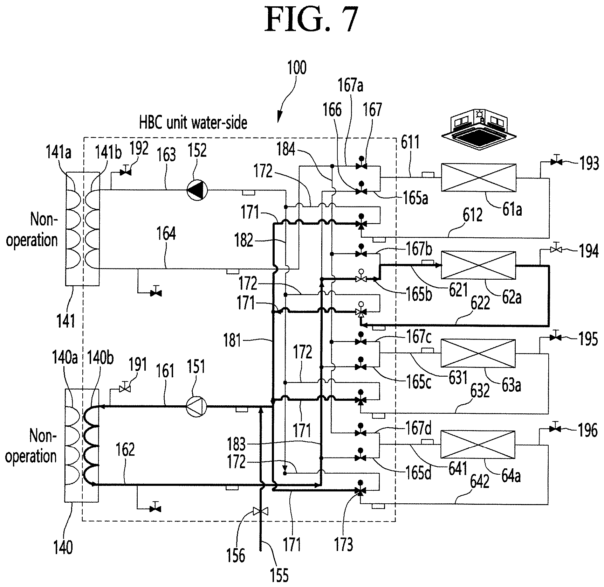

Next, referring to FIG. 7, a process for discharging air in a second group of pipes for allowing water to flow to the second indoor heat exchanger 62a may be performed. To this end, the air discharge portion 192 provided in the common water outlet pipe 622 of the second indoor heat exchanger 62a may be opened with the maximum opening degree, and the first valve 166 corresponding to the second indoor heat exchanger 62a may be opened. In addition, the common water outlet pipe 622 of the second indoor heat exchanger 62a may communicate with the first water outlet pipe 171 by a three-way valve 173 corresponding to the second indoor heat exchanger 62a.

On the other hand, the air discharge portions 193, 195, and 196 corresponding to the first indoor heat exchanger 61a and the third and fourth indoor heat exchangers 63a and 64a are closed, and the first valve 166 and the second valve 167 corresponding to the first indoor heat exchanger 61a, and the third and fourth indoor heat exchangers 63a and 64a may be closed. In addition, the air discharge portion 192 provided in the first connection pipe 163 of the second heat exchanger 141 is closed, and the air discharge portion 191 provided in the first connection pipe 161 of the first heat exchanger 140 is opened.

In this case, since water flows only into the second group of pipes, the pressure of the water flowing in the second group of pipes is large, and thus, the air in the second group of pipes may be effectively discharged to the outside through the air discharge portions 191 and 193.

The process of discharging the air in the second group of pipes may be finished when a fourth set time has elapsed.

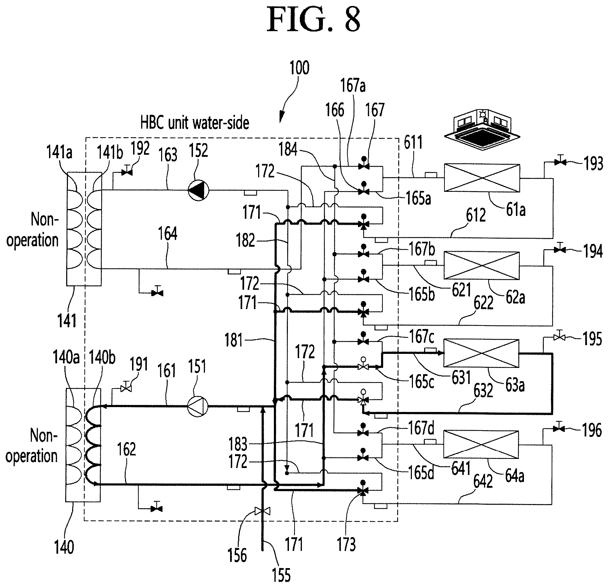

Next, referring to FIG. 8, a process for discharging air in a third group of pipes for allowing water to flow to the third indoor heat exchanger 63a may be performed. To this end, the air discharge portion 195 provided in the common water outlet pipe 612 of the third indoor heat exchanger 63a may be opened with the maximum opening degree, and the first valve 166 corresponding to the third indoor heat exchanger 63a may be opened. In addition, the common water outlet pipe 632 of the third indoor heat exchanger 63a may communicate with the first water outlet pipe 171 by the three-way valve 173 corresponding to the third indoor heat exchanger 63a.

On the other hand, the air discharge portions 193, 194, and 196 corresponding to the first indoor heat exchanger 61a and the second and fourth indoor heat exchangers 62a and 64a are closed, and the first valve 166 and the second valve 167 corresponding to the first indoor heat exchanger 61a, and the second and fourth indoor heat exchangers 62a and 64a may be closed. In addition, the air discharge portion 192 provided in the first connection pipe 163 of the second heat exchanger 141 is closed, and the air discharge portion 191 provided in the first connection pipe 161 of the first heat exchanger 140 is opened.

In this case, since water flows only into the third group of pipes, the pressure of the water flowing in the third group of pipes is large, and thus, the air in the third group of pipes may be effectively discharged to the outside through the air discharge portions 191 and 195.

The process of discharging the air in the third group of pipes may be finished when a fifth set time has elapsed.

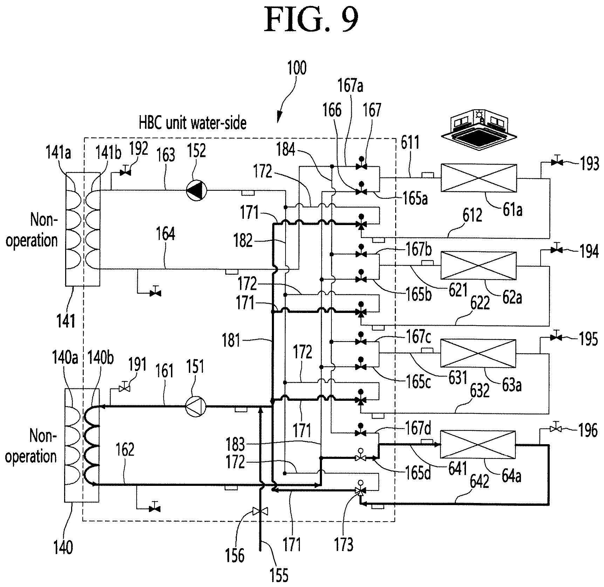

Next, referring to FIG. 9, a process for discharging air in a fourth group of pipes for allowing water to flow to the fourth indoor heat exchanger 64a may be performed. To this end, the air discharge portion 196 provided in the common water outlet pipe 642 of the fourth indoor heat exchanger 64a may be opened with the maximum opening degree, and the first valve 166 corresponding to the fourth indoor heat exchanger 64a may be opened. In addition, the common water outlet pipe 642 of the fourth indoor heat exchanger 64a may communicate with the first water outlet pipe 171 by the three-way valve 173 corresponding to the fourth indoor heat exchanger 64a.

On the other hand, the air discharge portions 193, 194, and 195 corresponding to the first to third indoor heat exchangers 61a, 62a and 63a may be closed, and the first valve 166 and the second valve 167 correspond to the first to third indoor heat exchangers 61a, 62a and 63a may be closed. In addition, the air discharge portion 192 provided in the first connection pipe 163 of the second heat exchanger 141 is closed, and the air discharge portion 191 provided in the first connection pipe 161 of the first heat exchanger 140 is opened.

In this case, since water flows only into the fourth group of pipes, the pressure of the water flowing in the fourth group of pipes is large, and thus, the air in the fourth group of pipes may be effectively discharged to the outside through the air discharge portions 191 and 196.

The process of discharging the air in the fourth group of pipes may be finished when a sixth set time has elapsed. When the process of discharging the air in the fourth piping group is completed, the air discharge process is completed, and when the air discharge process is completed, the step of operating in the first water supply mode may be finished.

In the second water supply mode, the outdoor unit 10 is operated. Therefore, refrigerant flows to the first and second heat exchangers 140 and 141. For example, in the second water supply mode, the outdoor unit 10 performs a heating operation. Therefore, the first and second heat exchangers 140 and 141 may function as a condenser.

In the present embodiment, when the outdoor unit 10 performs a heating operation in the heating mode in the second water supply mode, the temperature of water in each group of pipes increases, so that the solubility of air may be lowered, thereby effectively removing air mixed with water from the group of pipes.

In the present embodiment, the step of operating in the second water supply mode may include a third supply process of performing filling of water while the first and second heat exchangers 140 and 141 are simultaneously operated.

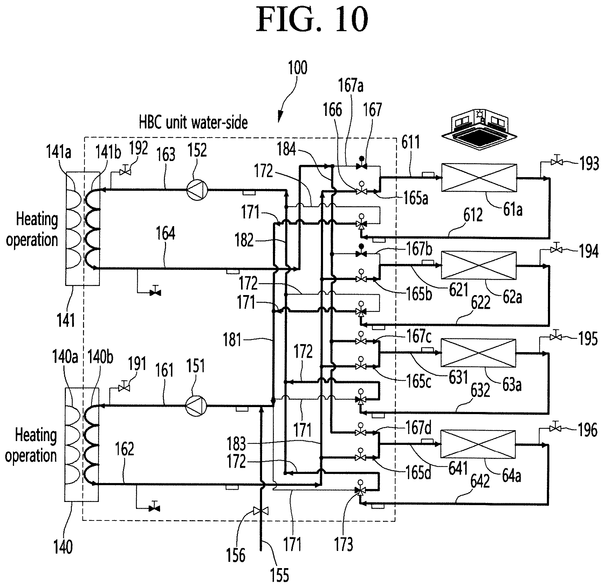

FIG. 10 is a view for describing a third supply process during the second water supply mode.

Referring to FIG. 10, in the third supply process, the first pump 151 and the second pump 152 may be operated.

Since water is supplied to the first connection pipe 161 of the first heat exchanger 140 provided with the first pump 151, an input duty of the first pump 151 may be larger than an input duty of the second pump 152. In the present embodiment, the input duty of the pump is related to the pumping amount of the pumps 151 and 152. The large input duty of the pumps 151 and 152 means that the pumping amount of water per unit time is large.

Since the pumping amount of the first pump 151 is greater than the pumping amount of the second pump 152, the operations of the plurality of first valves 166, the plurality of second valves 167, and the plurality of three-way valves 173 may be controlled such that water pumped by the first pump 151 flows to all of the indoor heat exchangers 61a, 62a, 63a, and 64a, and water pumped by the second pump 152 flows to some indoor heat exchangers 63a and 64a.

Referring to FIG. 10 as an example, water pumped by the second pump 152 may flow to the third and fourth indoor heat exchangers 63a and 64a.

The air discharge portions 191, 192, 193, 194, 195, and 196 may be opened with a set opening degree (an opening degree less than the maximum opening degree) such that air may be discharged to the outside while the third supplying process is performed.

The third supply process may be finished when a seventh set time has elapsed.

The step of operating in the second water supply mode may further include a fourth supply process of performing filling of water and discharging air while some of the first and second heat exchangers 140 and 141 are operated.

Alternatively, the step of operating in the second water supply mode may include only one of the third supply process and the fourth supply process.

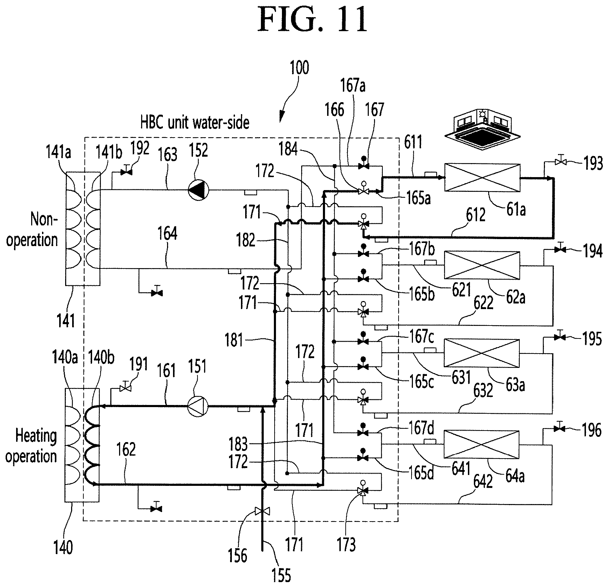

FIGS. 11 to 14 are views for describing a fourth supply process during the second water supply mode.

Referring to FIGS. 11 to 14, the fourth supply process is a step of discharging air from a pipe connected to a specific indoor heat exchanger by a strong water pressure by supplying water only to the specific indoor heat exchanger.

First, referring to FIG. 11, the first pump 151 and the first heat exchanger 140 may operate while the second pump 152 and the second heat exchanger 141 are stopped.
a process for discharging air inside the first group of pipes for flowing water to the first indoor heat exchanger 61a may be performed.

To this end, the air discharge portion 193 provided in the common water outlet pipe 612 of the first indoor heat exchanger 61a may be opened with the maximum opening degree or an opening degree less than the maximum opening degree, and a first valve 166 corresponding to the first indoor heat exchanger 61a may be opened.

On the other hand, the air discharge portions 194, 195, and 196 corresponding to the second to fourth indoor heat exchangers 62a, 63a and 64a may be closed, and the first valve 166 and the second valve 167 correspond to the second to fourth indoor heat exchangers 62a, 63a and 64a may be closed. In addition, the air discharge portion 192 provided in the first connection pipe 163 of the second heat exchanger 141 is closed, and the air discharge portion 191 provided in the first connection pipe 161 of the first heat exchanger 140 is opened.

In this case, since water flows only into the first group of pipes, the pressure of the water flowing in the first group of pipes is large, and thus, the air in the first group of pipes may be effectively discharged to the outside through the air discharge portions 191 and 193.

The process of discharging the air in the first group of pipes may be finished when an eighth set time has elapsed.

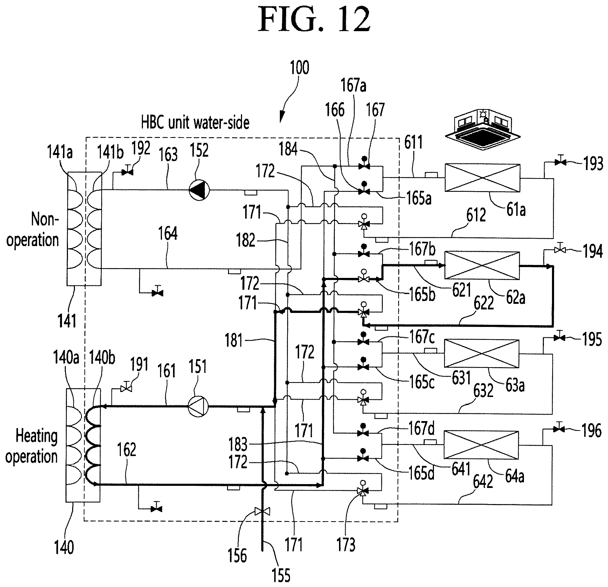

Next, referring to FIG. 12, a process for discharging air in a second group of pipes for allowing water to flow to the second indoor heat exchanger 62a may be performed. To this end, the air discharge portion 194 provided in the common water outlet pipe 622 of the second indoor heat exchanger 62a may be opened with the maximum opening degree or an opening degree less than the maximum opening degree, and a first valve 166 corresponding to the second indoor heat exchanger 62a may be opened.

On the other hand, the air discharge portions 193, 195, and 196 corresponding to the first indoor heat exchanger 61a and the third and fourth indoor heat exchangers 63a and 64a are closed, and the first valve 166 and the second valve 167 corresponding to the first indoor heat exchanger 61a, and the third and fourth indoor heat exchangers 63a and 64a may be closed. In addition, the air discharge portion 192 provided in the first connection pipe 163 of the second heat exchanger 141 is closed, and the air discharge portion 191 provided in the first connection pipe 161 of the first heat exchanger 140 is opened.

In this case, since water flows only into the second group of pipes, the pressure of the water flowing in the second group of pipes is large, and thus, the air in the second group of pipes may be effectively discharged to the outside through the air discharge portions 191 and 193.

The process of discharging air in the second group of pipes may be finished when a ninth set time has elapsed.

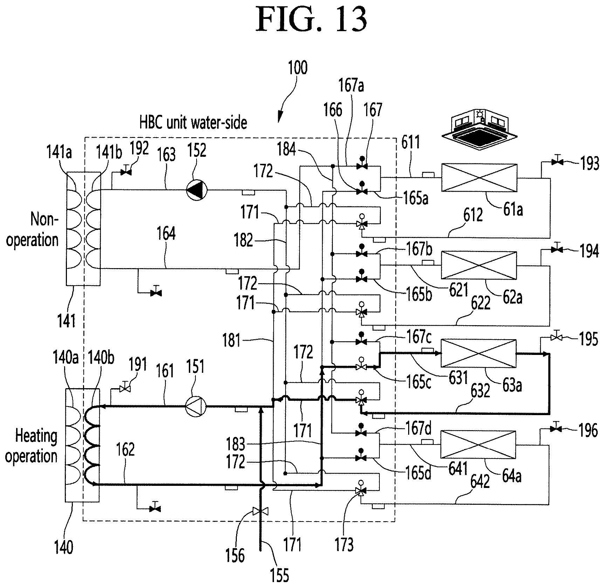

Next, referring to FIG. 13, a process for discharging air in a third group of pipes for allowing water to flow to the third indoor heat exchanger 63a may be performed. To this end, the air discharge portion 195 provided in the common water outlet pipe 632 of the third indoor heat exchanger 63a may be opened with the maximum opening degree or an opening degree less than the maximum opening degree, and a first valve 166 corresponding to the third indoor heat exchanger 63a may be opened.

On the other hand, the air discharge portions 193, 194, and 196 corresponding to the first indoor heat exchanger 61a and the second and fourth indoor heat exchangers 62a and 64a are closed, and the first valve 166 and the second valve 167 corresponding to the first indoor heat exchanger 61a, and the second and fourth indoor heat exchangers 62a and 64a may be closed. In addition, the air discharge portion 192 provided in the first connection pipe 163 of the second heat exchanger 141 is closed, and the air discharge portion 191 provided in the first connection pipe 161 of the first heat exchanger 140 is opened.

In this case, since water flows only into the third group of pipes, the pressure of the water flowing in the third group of pipes is large, and thus, the air in the third group of pipes may be effectively discharged to the outside through the air discharge portions 191 and 195.

The process of discharging air in the third group of pipes may be finished when a tenth set time has elapsed.

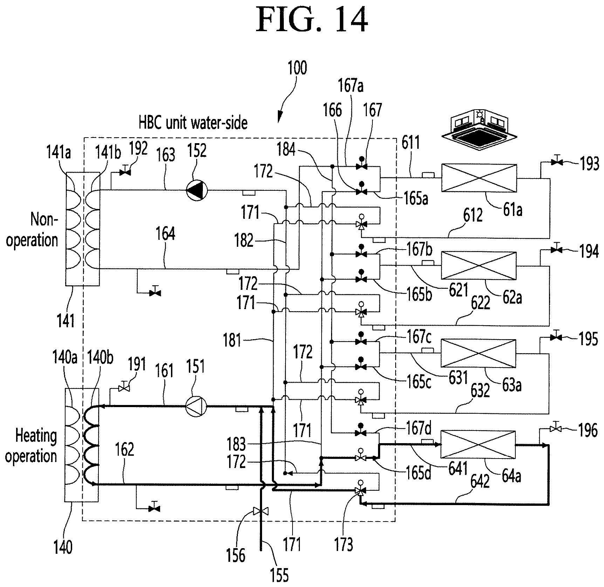

Next, referring to FIG. 14, a process for discharging air in a fourth group of pipes for allowing water to flow to the fourth indoor heat exchanger 64a may be performed. To this end, the air discharge portion 196 provided in the common water outlet pipe 642 of the fourth indoor heat exchanger 64a may be opened with the maximum opening degree or an opening degree less than the maximum opening degree, and the first valve 166 corresponding to the fourth indoor heat exchanger 64a may be opened.

On the other hand, the air discharge portions 193, 194, and 195 corresponding to the first to third indoor heat exchangers 61a, 62a and 63a may be closed, and the first valve 166 and the second valve 167 correspond to the first to third indoor heat exchangers 61a, 62a and 63a may be closed. In addition, the air discharge portion 192 provided in the first connection pipe 163 of the second heat exchanger 141 is closed, and the air discharge portion 191 provided in the first connection pipe 161 of the first heat exchanger 140 is opened.

In this case, since water flows only into the fourth group of pipes, the pressure of the water flowing in the fourth group of pipes is large, and thus, the air in the fourth group of pipes may be effectively discharged to the outside through the air discharge portions 191 and 196.

The process of discharging air in the fourth group of pipes may be finished when an eleventh set time has elapsed.

When the process of discharging the air in the fourth group of pipes group is completed, the fourth supply process is completed.

The step of operating in the second water supply mode may include an air discharge process of performing filling of water and discharging air while the first and second heat exchangers 140 and 141 are operated.

In the present embodiment, the step of operating in the second water supply mode does not include the third supply process and the fourth supply process, and may include only the air discharge process.

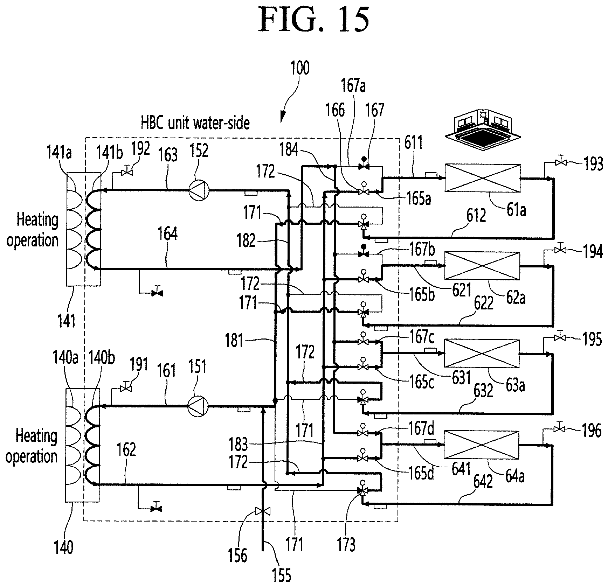

FIG. 15 is a view for describing an air discharge process during the second water supply mode.

Referring to FIG. 15, the first pump 151 and the second pump 152 may be operated in the air discharge process. In addition, in the air discharge process, the outdoor unit 10 may operate in a heating mode, and the first and second heat exchangers 140 and 141 may operate.

Since water is supplied to the first connection pipe 161 of the first heat exchanger 140 provided with the first pump 151, an input duty of the first pump 151 may be larger than an input duty of the second pump 152.

The input duty of the first pump 151 in the air discharge process may be larger than the input duty of the first pump 151 in the third supply process. The input duty of the second pump 152 in the air discharge process may be larger than the input duty of the second pump 152 in the third supply process.

Since the pumping amount of the first pump 151 is greater than the pumping amount of the second pump 152, the operations of the plurality of first valves 166, the plurality of second valves 167, and the plurality of three-way valves 173 may be controlled such that water pumped from the first pump 151 flows to all of the indoor heat exchangers 61a, 62a, 63a, and 64a, and water pumped from the second pump 152 flows to some indoor heat exchangers 63a and 64a.

Referring to FIG. 15 as an example, water pumped by the second pump 152 may flow to the third and fourth indoor heat exchangers 63a and 64a.

The air discharge portions 191, 192, 193, 194, 195, and 196 may be opened with a set opening degree (an opening degree less than the maximum opening degree) such that air may be discharged to the outside while the air discharge process is performed.

The air discharge process may be finished when a twelfth set time has elapsed.

On the other hand, in the step (S3) of determining whether or not the filling of water is appropriate, it is possible to determine whether the filling of water is appropriate based on an output duty of a pump while varying the number of operating units of the plurality of indoor units.

In the case of varying the input duty of the pump, the output duty of the pump may be maintained within a normal range when the group of pipes is filled with water of a reference amount or more.

On the other hand, in the case of varying the input duty of the pump, the output duty of the pump is out of the normal range when the group of pipes is filled with water less than a reference amount,

Therefore, in the present disclosure, it is possible to determine whether the filling of water is appropriate based on the output duty of the pump.

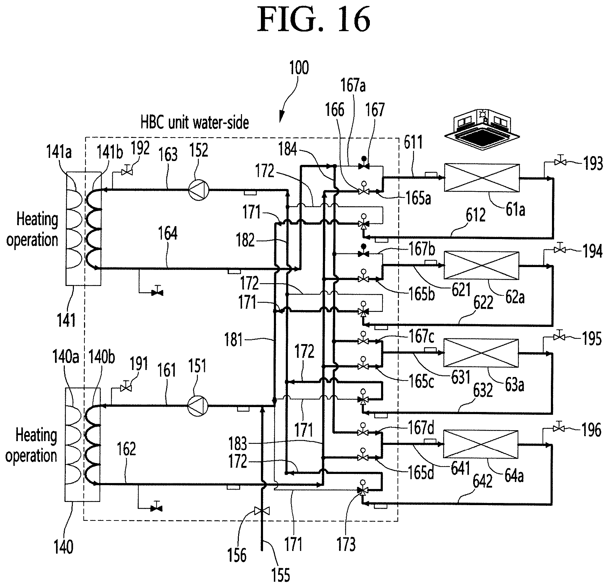

FIGS. 16 to 19 are views showing the operation of the air conditioner for determining whether the filling amount of water is appropriate.

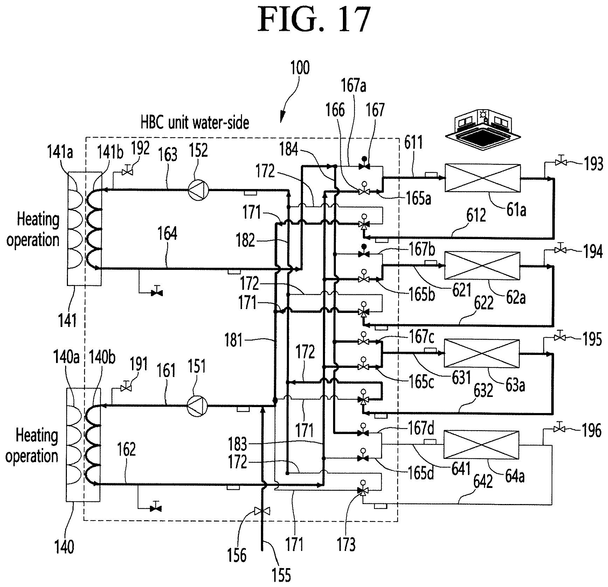

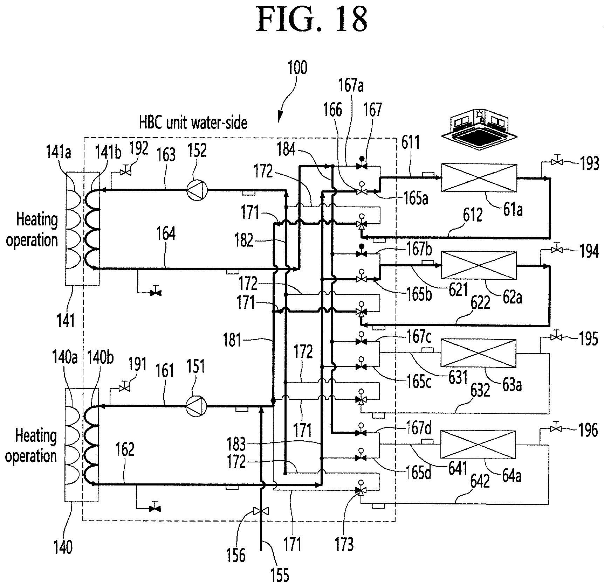

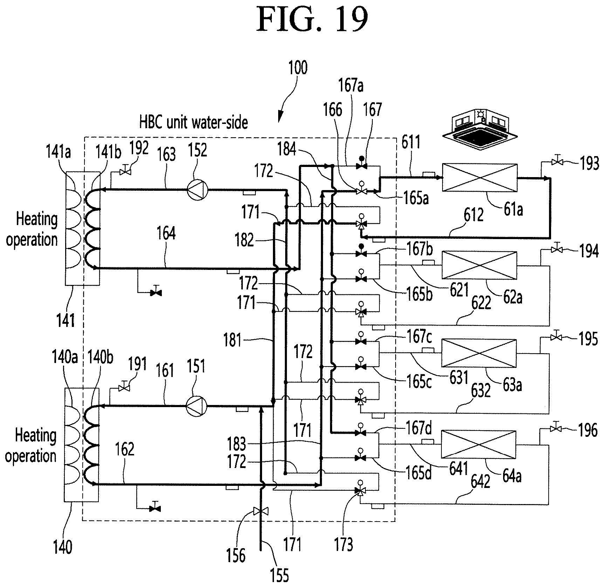

FIG. 16 shows that all indoor units operate, FIG. 17 shows that three indoor units operate, FIG. 18 shows that two indoor units operate, and FIG. 19 shows that one indoor unit operates.

Referring to FIG. 16, the outdoor unit 10 may perform a heating operation, and the first and second heat exchangers 140 and 141 may function as a condenser.

In the step of determining whether or not the filling amount of water is appropriate, the number of indoor units operated may vary over time.

First, the first pump 151 and the second pump 152 are operated, and the plurality of first valves 166, the plurality of second valves 167 and the plurality of three-way valves 173 may be controlled such water flows to all of the indoor units 61a, 62a, 63a, and 64a.

Further, the air discharge portions 191, 192, 193, 194, 195, and 196 may be opened with a set opening degree (an opening degree less than the maximum opening degree) such that air in the group of pipes may be discharged to the outside.

The input duty of each of the pumps 151 and 152 in the step of determining whether the filling amount of water is appropriate may be identical to the input duty of the first pump 151 described with reference to FIG. 15.

As described above, when all of the indoor units operate, a controller may obtain information on the output duty of each of the pumps 151 and 152 and determine whether the output duties of the pumps 151 and 152 are within a normal range.

When the output duties of the pumps 151 and 152 are out of the normal range in a case where four indoor units are operating, the controller may determine that the filling amount of water is inappropriate.

When a reference time has elapsed, the plurality of first valves 166, the plurality of second valves 167, and the plurality of three-way valves 173 may be controlled such that water flows to the three indoor units 61a, 62a, and 63a as shown in FIG. 17.

In addition, the air discharge portions 191, 192, 193, 194, 195, and 196 are maintained to be opened with a set opening degree. As described above, when three indoor units operate, a controller may obtain information on the output duty of each of the pumps 151 and 152 and determine whether the output duty of the pump is within a normal range.

When the output duties of the pumps 151 and 152 are out of the normal range in a case where three indoor units are operating, the controller may determine that the filling amount of water is inappropriate.

When a reference time has elapsed, the plurality of first valves 166, the plurality of second valves 167, and the plurality of three-way valves 173 may be controlled such that water flows to the two indoor units 61a and 62a as shown in FIG. 18.

In addition, the air discharge portions 191, 192, 193, 194, 195, and 196 are maintained to be opened with a set opening degree. As described above, when two indoor units operate, a controller may obtain information on the output duty of each of the pumps 151 and 152 and determine whether the output duty of the pump is within a normal range.

When the output duties of the pumps 151 and 152 are out of the normal range in a case where two indoor units are operating, the controller may determine that the filling amount of water is inappropriate.

When a reference time has elapsed, the plurality of first valves 166, the plurality of second valves 167, and the plurality of three-way valves 173 may be controlled such that water flows to the one indoor unit 61a as shown in FIG. 19.

In addition, the air discharge portions 191, 192, 193, 194, 195, and 196 are maintained to be opened with a set opening degree. As described above, when one indoor unit operates, a controller may obtain information on the output duty of each of the pumps 151 and 152 and determine whether the output duty of the pump is within a normal range.

When the output duties of the pumps 151 and 152 are out of the normal range in a case where one indoor unit is operating, the controller may determine that the filling amount of water is inappropriate.

When the filling amount of water is appropriate, the filling of water is terminated, and information indicating that the filling of water is completed is output through an output device (S6). When the filling of water is completed, the valve 156 in the water supply pipe 155 may be automatically or manually closed.

On the other hand, when the filling amount of water is inappropriate, the air conditioner may be operated in a checking mode (S4).

In the checking mode, the air conditioner may perform the air discharge process of the second water supply mode described with reference to FIG. 15 for a set time.

Subsequently, the step (S5) of again determining whether or not the filling amount of water is appropriate may be performed. In the step S5 of again determining whether the filling amount of water is appropriate, the air conditioner operates in the same manner as described with reference to FIGS. 16 to 19.

When the filling amount of water is inappropriate as a result of again determining whether or not the filling amount of water is appropriate in step S5, error information may be output from the output device (S7). In addition, the air discharge portions 191, 192, 193, 194, 195 and 196 may be closed.

According to the present invention, it is possible to automatically fill the air conditioner with water, and determine that an appropriate amount of water is filled.

When the filling of water is completed, completion notification information is output, allowing a user to easily check the completion of filling of water.

In addition, when the filling of water is not normally performed in the water filling process, error information is output, allowing the user to easily check that the filling of the water is not normal.

In the present specification, the valves (the first valve 166, the second valve 167, and the three-way valve 173) for regulating the flow of water in the group of pipes may be collectively referred to as a group of valves.

## Claims

1. A water filling method for an air conditioner, the air conditioner including an outdoor unit (10) through which a refrigerant circulates, a plurality of indoor units (61, 62, 63, 64) through which water circulates, and a heat exchange device (100) including a plurality of heat exchangers (140, 141) which connect the outdoor unit (10) with the plurality of indoor units (61, 62, 63, 64) and perform heat exchange between the refrigerant and the water, a group of pipes (30, 31, 32, 33) which connect the plurality of indoor units (61, 62, 63, 64) with the plurality of heat exchangers (140, 141), a group of valves which regulates flow of water in the group of pipes, the method comprising:
operating the air conditioner in a water supply mode to fill the group of pipes with water;
determining (S3) whether a filling amount of water in the group of pipes is appropriate while continuously filling the group of pipes with water; and
outputting (S6), by an output device, information indicating that filling of water has been completed when it is determined that the filling amount of the water is appropriate,
wherein the water supply mode includes a first water supply mode (S1) in which water is supplied while the outdoor unit is stopped and a second water supply mode (S2) in which water is supplied while the outdoor unit is operated.

2. The water filling method of claim 1, wherein the operating in the first water supply mode includes a first supply process in which water is supplied and is distributed to the indoor units (61, 62, 63, 64) while a plurality of pumps (151, 152) for pumping water in the group of pipes are stopped.

3. The water filling method of claim 2, wherein the operating in the first water supply mode includes a second supply process in which water is supplied and distributed to the indoor units (61, 62, 63, 64) while some of the plurality of pumps are operated.

4. The water filling method of claim 3, wherein the plurality of heat exchangers includes a first heat exchanger (140) and a second heat exchanger (141),
wherein the plurality of pumps includes a first pump (151) corresponding to the first heat exchanger (140) and a second pump (152) corresponding to the second heat exchanger (141),
wherein the first pump (151) is provided in a connection pipe connected to the first heat exchanger (140) and water of a water supply source is supplied to the connection pipe, and
wherein the first pump (151) is operated and the second pump (152) is stopped in the second supply process.

5. The water filling method of any one of claims 1 to 4, wherein the air conditioner further includes a plurality of air discharge portions (191, 192, 193, 194, 195, 196) for discharging air in the group of pipes,
wherein the plurality of air discharge portions are opened with a set opening degree in the operating in the first water supply mode.

6. The water filling method of claim 3 or 4, wherein the operating in the first water supply mode further includes an air discharge process such that water flows through only some of the plurality of indoor units (61, 62, 63, 64).

7. The water filling method of claim 6, wherein the air conditioner further includes air discharge portions respectively corresponding to the plurality of indoor units (61, 62, 63, 64) to discharge air in the group of pipes,
wherein the air discharge portions corresponding to the indoor units (61, 62, 63, 64) through which the water flows are opened and the remaining air discharge portion are closed in the air discharge process.

8. The water filling method of claim 6, wherein the air discharge process includes allowing water to flow through other some of the indoor units (61, 62, 63, 64) after the water has flowed through the some of the plurality of indoor units (61, 62, 63, 64).

9. The water filling method of any one of claims 1 to 8, wherein the outdoor unit (10) is operated in a heating mode in the second water supply mode.

10. The water filling method of claim 9, wherein the second water supply mode include at least one of
a third supply process in which the plurality of pumps (151, 152) for pumping water in the group of pipes are operated and the plurality of heat exchangers (140, 141) are operated,
a fourth supply process in which some of the plurality of pumps (151, 152) for pumping water in the group of pipes are operated, some of the plurality of heat exchangers (140, 141) are operated, and water is allowed to flow through only some of the plurality of indoor units, and
an air discharge process in which the plurality of pumps for pumping water in the group of pipes are operated and the plurality of heat exchangers are operated.

11. The water filling method of claim 10, wherein the plurality of heat exchangers includes a first heat exchanger (140) and a second heat exchanger (141),
wherein the plurality of pumps includes a first pump (151) corresponding to the first heat exchanger (140) and a second pump (152) corresponding to the second heat exchanger (141),
wherein the first pump (151) is provided in a connection pipe connected to the first heat exchanger (140) and water of a water supply source is supplied to the connection pipe,
wherein an input duty of the first pump (151) is larger than an input duty of the second pump (152) in the third supply process, and
wherein an input duty of a pump operated in the air discharge process is larger than an input duty of a pump operated in the third supply process.

12. The water filling method of claim 10, wherein the fourth supply process includes allowing water to flow through other some of the indoor units (61, 62, 63, 64) after the water has flowed through the some of the plurality of indoor units (61, 62, 63, 64).

13. The water filling method of any one of preceding claims, wherein the determining of whether the filling amount of water is appropriate includes operating the plurality of pumps (151, 152) for pumping water in the group of pipes and operating the plurality of heat exchangers, and
wherein a number of the plurality of indoor units (61, 62, 63, 64) operated varies with a lapse of time.

14. The water filling method of claim 13, wherein it is determined that the filling amount of water is appropriate when an output duty of a pump operated is in a normal range, and
further comprising: operating (S4) the air conditioner in a checking mode when it is determined that the filling amount of water is inappropriate.

15. The water filling method of claim 14, wherein in the checking mode, the plurality of pumps for pumping water in the group of pipes are operated, the plurality of heat exchangers are operated, and water flows into all of the indoor units,
wherein, preferably, whether the filling amount of water is appropriate is again determined (S5) after completion of the checking mode, and
wherein, preferably, when the filling amount of water is appropriate, water filing completion information is output from the output device and when the filling amount of water is inappropriate, error information is output (S7) from the output device.

## Patentansprüche

1. Wasserfüllverfahren für eine Klimaanlage, wobei die Klimaanlage aufweist: eine Außeneinheit (10), durch die ein Kältemittel zirkuliert, mehrere Inneneinheiten (61, 62, 63, 64), durch die Wasser zirkuliert, und eine Wärmetauschvorrichtung (100), die mehrere Wärmetauscher (140, 141) aufweist, die die Außeneinheit (10) mit den mehreren Inneneinheiten (61, 62, 63, 64) verbinden und einen Wärmeaustausch zwischen dem Kältemittel und dem Wasser durchführen, eine Gruppe von Leitungen (30, 31, 32, 33), die die mehreren Inneneinheiten (61, 62, 63, 64) mit den mehreren Wärmetauschern (140, 141) verbinden, eine Gruppe von Ventilen, die den Wasserfluss in der Gruppe der Leitungen regeln, wobei das Verfahren aufweist:
Betreiben der Klimaanlage in einem Wasserzufuhrmodus, um die Gruppe der Leitungen mit Wasser zu füllen;
Feststellen (S3), ob eine Füllmenge des Wassers in der Gruppe der Leitungen angemessen ist, während die Gruppe der Leitungen kontinuierlich mit Wasser gefüllt wird; und
Ausgeben (S6) von Informationen durch eine Ausgabevorrichtung, die anzeigen, dass das Füllen von Wasser abgeschlossen ist, wenn festgestellt wird, dass die Füllmenge des Wassers angemessen ist,
wobei der Wasserzufuhrmodus einen ersten Wasserzufuhrmodus (S1), in dem Wasser zugeführt wird, während die Außeneinheit gestoppt ist, und einen zweiten Wasserzufuhrmodus (S2) aufweist, in dem Wasser zugeführt wird, während die Außeneinheit betrieben wird.

2. Wasserfüllverfahren nach Anspruch 1, wobei das Betreiben im ersten Wasserzufuhrmodus einen ersten Zufuhrprozess aufweist, bei dem Wasser zugeführt und an die Inneneinheiten (61, 62, 63, 64) verteilt wird, während mehrere Pumpen (151, 152) zum Pumpen von Wasser in der Gruppe der Leitungen gestoppt sind.

3. Wasserfüllverfahren nach Anspruch 2, wobei das Betreiben im ersten Wasserzufuhrmodus einen zweiten Zufuhrprozess aufweist, bei dem Wasser zugeführt und an die Inneneinheiten (61, 62, 63, 64) verteilt wird, während einige der mehreren Pumpen betrieben werden.

4. Wasserfüllverfahren nach Anspruch 3, wobei die mehreren Wärmetauscher einen ersten Wärmetauscher (140) und einen zweiten Wärmetauscher (141) aufweisen, wobei die mehreren Pumpen eine erste Pumpe (151), die dem ersten Wärmetauscher (140) entspricht, und eine zweite Pumpe (152) aufweisen, die dem zweiten Wärmetauscher (141) entspricht,
wobei die erste Pumpe (151) in einer mit dem ersten Wärmetauscher (140) verbundenen Verbindungsleitung vorgesehen ist und Wasser einer Wasserzufuhrquelle der Verbindungsleitung zugeführt wird, und
wobei im zweiten Zufuhrprozess die erste Pumpe (151) betrieben wird und die zweite Pumpe (152) gestoppt ist.

5. Wasserfüllverfahren nach einem der Ansprüche 1 bis 4, wobei die Klimaanlage ferner mehrere Luftablassabschnitte (191, 192, 193, 194, 195, 196) zum Ablassen von Luft in der Gruppe der Leitungen aufweist,
wobei die mehreren Luftablassabschnitte mit einem eingestellten Öffnungsgrad beim Betreiben im ersten Wasserzufuhrbetriebsart geöffnet werden.

6. Wasserfüllverfahren nach Anspruch 3 oder 4, wobei das Betreiben im ersten Wasserzufuhrmodus ferner einen Luftablassprozess aufweist, so dass Wasser nur durch einige der mehreren Inneneinheiten (61, 62, 63, 64) fließt.

7. Wasserfüllverfahren nach Anspruch 6, wobei die Klimaanlage ferner Luftablassabschnitte aufweist, die jeweils den mehreren Inneneinheiten (61, 62, 63, 64) entsprechen, um Luft in der Gruppe der Leitungen abzulassen,
wobei die Luftablassabschnitte, die den Inneneinheiten (61, 62, 63, 64) entsprechen, durch die das Wasser fließt, geöffnet werden und der verbleibende Luftablassabschnitt im Luftablassprozess geschlossen wird.

8. Wasserfüllverfahren nach Anspruch 6, wobei der Luftablassprozess aufweist, Wasser durch andere einige der Inneneinheiten (61, 62, 63, 64) fließen zu lassen, nachdem das Wasser durch einige der mehreren Inneneinheiten (61, 62, 63, 64) geflossen ist.

9. Wasserfüllverfahren nach einem der Ansprüche 1 bis 8, wobei die Außeneinheit (10) im zweiten Wasserzufuhrmodus in einem Heizmodus betrieben wird.

10. Wasserfüllverfahren nach Anspruch 9, wobei der zweite Wasserzufuhrmodus mindestens einen aufweist von:
einen dritten Zufuhrprozess, in dem die mehreren Pumpen (151, 152) zum Pumpen von Wasser in der Gruppe der Leitungen betrieben werden und die mehreren Wärmetauscher (140, 141) betrieben werden,
einen vierten Zufuhrprozess, in dem einige der mehreren Pumpen (151, 152) zum Pumpen von Wasser in der Gruppe der Leitungen betrieben werden, einige der mehreren Wärmetauscher (140, 141) betrieben werden und Wasser nur durch einige der mehreren Inneneinheiten fließen gelassen wird, und
einen Luftablassprozess, bei dem die mehreren Pumpen zum Pumpen von Wasser in der Gruppe der Leitungen betrieben werden und die mehreren Wärmetauscher betrieben werden.

11. Wasserfüllverfahren nach Anspruch 10, wobei die mehreren Wärmetauscher einen ersten Wärmetauscher (140) und einen zweiten Wärmetauscher (141) aufweisen,
wobei die mehreren Pumpen eine erste Pumpe (151), die dem ersten Wärmetauscher (140) entspricht, und eine zweite Pumpe (152) aufweisen, die dem zweiten Wärmetauscher (141) entspricht,
wobei die erste Pumpe (151) in einer mit dem ersten Wärmetauscher (140) verbundenen Verbindungsleitung vorgesehen ist und Wasser einer Wasserzufuhrquelle der Verbindungsleitung zugeführt wird,
wobei eine Eingangsleistung der ersten Pumpe (151) größer ist als eine Eingangsleistung der zweiten Pumpe (152) im dritten Zufuhrprozess, und
wobei eine Eingangsleistung einer Pumpe, die im Luftablassprozess betrieben wird, größer ist als eine Eingangsleistung einer Pumpe, die im dritten Zufuhrprozess betrieben wird.

12. Wasserfüllverfahren nach Anspruch 10, wobei der vierte Zufuhrprozess aufweist, das Wasser durch andere einige der Inneneinheiten (61, 62, 63, 64) fließen zu lassen, nachdem das Wasser durch einige der mehreren Inneneinheiten (61, 62, 63, 64) geflossen ist.

13. Wasserfüllverfahren nach einem der vorhergehenden Ansprüche, wobei das Feststellen, ob die Füllmenge an Wasser angemessen ist, das Betreiben der mehreren Pumpen (151, 152) zum Pumpen von Wasser in der Gruppe der Leitungen und das Betreiben der mehreren Wärmetauscher aufweist, und
wobei sich die Anzahl der mehreren betriebenen Inneneinheiten (61, 62, 63, 64) im Ablauf der Zeit ändert.

14. Wasserfüllverfahren nach Anspruch 13, wobei festgestellt wird, dass die Wasserfüllmenge angemessen ist, wenn eine Ausgangsleistung einer betriebenen Pumpe in einem normalen Bereich liegt, und
das ferner aufweist: Betreiben (S4) der Klimaanlage in einem Prüfmodus, wenn festgestellt wird, dass die Füllmenge an Wasser nicht angemessen ist.

15. Wasserfüllverfahren nach Anspruch 14, wobei im Prüfmodus die mehreren Pumpen zum Pumpen von Wasser in der Gruppe der Leitungen betrieben werden, die mehreren Wärmetauscher betrieben werden und Wasser in alle Inneneinheiten fließt,
wobei vorzugsweise nach Beendigung des Prüfmodus erneut festgestellt wird (S5), ob die Füllmenge des Wassers angemessen ist, und
wobei vorzugsweise, wenn die Füllmenge des Wassers angemessen ist, Wassereinfüllbeendigungsinformationen von der Ausgabevorrichtung ausgegeben werden, und wenn die Wassereinfüllmenge nicht angemessen ist, Fehlerinformationen von der Ausgabevorrichtung ausgegeben werden (S7).

## Revendications

1. Procédé de remplissage en eau pour un climatiseur, ledit climatiseur comprenant une unité extérieure (10) dans laquelle circule un réfrigérant, une pluralité d'unités intérieures (61, 62, 63, 64) dans laquelle circule de l'eau, et un dispositif d'échange thermique (100) comprenant une pluralité d'échangeurs de chaleur (140, 141) reliant l'unité extérieure (10) à la pluralité d'unités intérieures (61, 62, 63, 64) et effectuant un échange thermique entre le réfrigérant et l'eau, un groupe de tuyaux (30, 31, 32, 33) reliant la pluralité d'unités intérieures (61, 62, 63, 64) à la pluralité d'échangeurs de chaleur (140, 141), un groupe de vannes régulant l'écoulement de l'eau dans le groupe de tuyaux, ledit procédé comprenant :
la mise en service du climatiseur dans un mode de refoulement d'eau pour remplir d'eau le groupe de tuyaux ;
la détermination (S3) si une quantité de remplissage d'eau dans le groupe de tuyaux est appropriée pendant que le groupe de tuyaux est rempli en eau de manière continue ; et
l'émission (S6), par un dispositif de sortie, d'une information indiquant que le remplissage en eau a été réalisé lorsqu'il est déterminé que la quantité de remplissage en eau est appropriée,
le mode de refoulement d'eau comportant un premier mode de refoulement d'eau (S1) où l'eau est refoulée alors que l'unité extérieure est à l'arrêt, et un deuxième mode de refoulement d'eau (S2) où l'eau est refoulée alors que l'unité extérieure est en service.

2. Procédé de remplissage d'eau selon la revendication 1, où la mise en service dans le premier mode de refoulement d'eau comprend un premier processus de refoulement où l'eau est refoulée et distribuée vers les unités intérieures (61, 62, 63, 64) pendant qu'une pluralité de pompes (151, 152) pompant l'eau dans le groupe de tuyaux sont mises à l'arrêt.

3. Procédé de remplissage d'eau selon la revendication 2, où la mise en service dans le premier mode de refoulement d'eau comprend un deuxième processus de refoulement où l'eau est refoulée et distribuée vers les unités intérieures (61, 62, 63, 64) pendant que quelques pompes de la pluralité de pompes sont mises en service.

4. Procédé de remplissage d'eau selon la revendication 3, où la pluralité d'échangeurs de chaleur comprend un premier échangeur de chaleur (140) et un deuxième échangeur de chaleur (141), où la pluralité de pompes comprend une première pompe (151) correspondant au premier échangeur de chaleur (140) et une deuxième pompe (152) correspondant au deuxième échangeur de chaleur (141),
où la première pompe (151) est prévue dans un tuyau de connexion raccordé au premier échangeur de chaleur (140) et l'eau d'une source d'alimentation en eau est refoulée vers le tuyau de connexion, et
où la première pompe (151) est mise en service et la deuxième pompe (152) est mise à l'arrêt lors du deuxième processus de refoulement.

5. Procédé de remplissage d'eau selon l'une des revendications 1 à 4, où le climatiseur comprend en outre une pluralité de sections de refoulement d'air (191, 192, 193, 194, 195, 196) destinées à refouler de l'air dans le groupe de tuyaux,
où la pluralité de sections de refoulement d'air est ouverte suivant un degré d'ouverture réglé lors de la mise en service dans le premier mode de refoulement d'eau.

6. Procédé de remplissage d'eau selon la revendication 3 ou la revendication 4, où la mise en service dans le premier mode de refoulement d'eau comprend en outre un processus de refoulement d'air tel que l'eau ne s'écoule que dans quelques unités de la pluralité d'unités intérieures (61, 62, 63, 64).

7. Procédé de remplissage d'eau selon la revendication 6, où le climatiseur comprend en outre des sections de refoulement d'air correspondant respectivement à la pluralité d'unités intérieures (61, 62, 63, 64) pour refouler de l'air dans le groupe de tuyaux,
où les sections de refoulement d'air correspondant aux unités intérieures (61, 62, 63, 64) dans lesquelles s'écoule l'eau sont ouvertes et les sections de refoulement d'air restantes sont fermées lors du processus de refoulement d'air.

8. Procédé de remplissage d'eau selon la revendication 6, où le processus de refoulement d'air comprend la possibilité pour l'eau de s'écouler dans quelques autres unités intérieures (61, 62, 63, 64) après que l'eau s'est écoulée dans les quelques unités de la pluralité d'unités intérieures (61, 62, 63, 64).

9. Procédé de remplissage d'eau selon l'une des revendications 1 à 8, où l'unité extérieure (10) est mise en service dans un mode de chauffage lors du deuxième mode de refoulement d'eau.

10. Procédé de remplissage d'eau selon la revendication 9, où le deuxième mode de refoulement d'eau comprend au moins un des processus suivants :
un troisième processus de refoulement où la pluralité de pompes (151, 152) pompant l'eau dans le groupe de tuyaux est mise en service et la pluralité d'échangeurs de chaleur (140, 141) est mise en service,
un quatrième processus de refoulement où quelques pompes de la pluralité de pompes (151, 152) pompant l'eau dans le groupe de tuyaux sont mises en service, quelques échangeurs de la pluralité d'échangeurs de chaleur (140, 141) sont mis en service, et où il est possible à l'eau de ne s'écouler que dans quelques unités de la pluralité d'unités intérieures, et
un processus de refoulement d'air où la pluralité de pompes pompant l'eau dans le groupe de tuyaux est mise en service et la pluralité d'échangeurs de chaleur est mise en service.

11. Procédé de remplissage d'eau selon la revendication 10, où la pluralité d'échangeurs de chaleur comprend un premier échangeur de chaleur (140) et un deuxième échangeur de chaleur (141),
où la pluralité de pompes comprend une première pompe (151) correspondant au premier échangeur de chaleur (140) et une deuxième pompe (152) correspondant au deuxième échangeur de chaleur (141),
où la première pompe (151) est prévue dans un tuyau de connexion raccordé au premier échangeur de chaleur (140) et l'eau d'une source d'alimentation en eau est refoulée vers le tuyau de connexion,
où une utilisation d'entrée de la première pompe (151) est supérieure à une utilisation d'entrée de la deuxième pompe (152) lors du troisième processus de refoulement, et
où une utilisation d'entrée d'une pompe mise en service lors du processus de refoulement d'air est supérieure à une utilisation d'entrée d'une pompe mise en service lors du troisième processus de refoulement.

12. Procédé de remplissage d'eau selon la revendication 10, où le quatrième processus de refoulement comprend la possibilité pour l'eau de s'écouler dans quelques autres unités intérieures (61, 62, 63, 64) après que l'eau s'est écoulée dans les quelques unités de la pluralité d'unités intérieures (61, 62, 63, 64).

13. Procédé de remplissage d'eau selon l'une des revendications précédentes, où la détermination si la quantité de remplissage en eau est appropriée comprend une mise en service de la pluralité de pompes (151, 152) pour pomper l'eau dans le groupe de tuyaux et une mise en service de la pluralité d'échangeurs de chaleur, et
où le nombre de la pluralité d'unités intérieures (61, 62, 63, 64) mises en service varie en fonction du temps.

14. Procédé de remplissage d'eau selon la revendication 13, où il est déterminé que la quantité de remplissage en eau est appropriée si une utilisation de sortie d'une pompe mise en service est comprise dans une plage normale, et
comprenant en outre : une mise en service (S4) du climatiseur dans un mode de contrôle s'il est déterminé que la quantité de remplissage en eau est inappropriée.

15. Procédé de remplissage d'eau selon la revendication 14, où, lors du mode de contrôle, la pluralité de pompes pompant l'eau dans le groupe de tuyaux est mise en service, la pluralité d'échangeurs de chaleur est mise en service, et l'eau s'écoule dans toutes les unités intérieures,
où il est préférentiellement déterminé à nouveau (S5) si la quantité de remplissage en eau est appropriée après exécution du mode de contrôle, et
où, si la quantité de remplissage en eau est appropriée, l'information de fin du remplissage en eau est préférentiellement émise par le dispositif de sortie, et si la quantité de remplissage en eau est inappropriée, une information d'erreur est émise (S7) par le dispositif de sortie.
